# EUROPEAN PATENT APPLICATION

(11) **EP 1 595 912 A1**
(43) Date of publication of application: **16.11.2005**
(21) Application number: 04707305.1
(22) Date of filing: 02.02.2004
(51) Int. Cl.: C08J 5/02, B29C 41/14, A41D 19/00, C08L 9/00

(54) **DIP MOLDED ARTICLE WITH LOW SURFACE RESISTIVITY**

(30) Priority: 05.02.2003 JP 2003027771; 16.04.2003 JP 2003111226
(71) Applicant: ZEON CORPORATION, Tokyo 100-8323 (JP)
(72) Inventor: KODAMA, Kazumi, Chiyoda-ku, Tokyo 100-8323 (JP); NAKAMURA, Misao, Chiyoda-ku, Tokyo 100-8323 (JP); INOUE, Toshihiro, Chiyoda-ku, Tokyo 100-8323 (JP)
(74) Representative: Albrecht, Thomas
(86) International application number: PCT/JP2004/001000
(87) International publication number: WO 2004/069902

(57) **Abstract**

The present invention relates to a dip molding having a low surface resistivity, the dip molding having a surface resistivity that is lower than that of a conventional product even after being washed with superpure water. The dip molding of the present invention has a surface resistivity, measured under an atmosphere of 20°C and a relative humidity of 65%, of 10⁷ to 10¹⁰ Ω/square. Since the dip molding of the present invention has a low surface resistivity, it can suitably be used as a glove for precision electronic component production and semiconductor component production.

## Description

### Technical Field

The present invention relates to a dip molding, a production process therefor, and a dip molding latex composition.

### Background Art

Rubber gloves formed by dip molding of a dip molding latex composition comprising a natural rubber latex or an acrylonitrile-butadiene copolymer latex are flexible and have sufficient mechanical strength, and are therefore used in various fields.

In particular, in precision electronic component production and semiconductor component production, since micro particles attached to the surface of rubber gloves or metal ions contained in rubber gloves affect partially-finished products or products, rubber gloves are washed in advance with pure water or superpure water before use.

However, polymers forming the natural rubber latex and the acrylonitrile-butadiene copolymer latex are highly electrically insulating, and the surface resistivity of rubber gloves produced from these latexes exceeds 10¹⁰ Ω/square. Furthermore, by washing with pure water or superpure water, the surface resistivity of rubber gloves thus washed tends to become even higher.

When the surface resistivity of rubber gloves exceeds 10¹⁰ Ω/square, static electricity builds up during work, and this static electricity gives rise to the problem that precision electronic components or semiconductor components might be destroyed.

### Disclosure of Invention

Under the above-mentioned circumstances, it is an object of the present invention to provide a dip molding having a low surface resistivity and having a lower surface resistivity than that of a conventional dip molding even after being washed with superpure water, and a production process therefor.

The object of the present invention has been accomplished by means (1) to (4) below.
(1) A dip molding having a surface resistivity, measured under an atmosphere of 20°C and a relative humidity of 65%, of 10⁷ to 10¹⁰ Ω/square,
(2) a process for producing a dip molding, the process comprising forming on a dip molding mold a dip molding layer comprising a dip molding latex composition, and then bringing the dip molding layer into contact with a cationic surfactant,
(3) a dip molding latex composition comprising a rubber latex to which is added a cationic surfactant, and
(4) a process for producing a dip molding, the process comprising forming on a dip molding mold a dip molding layer comprising the dip molding latex composition according to (3) above, and then vulcanizing the dip molding layer.

### Best Mode for Carrying Out the Invention

The present invention is explained in detail below.

### (Dip Molding)

The dip molding of the present invention has a surface resistivity, measured under an atmosphere of 20°C and a relative humidity of 65%, of 10⁷ to 10¹⁰ Ω/square. The surface resistivity of the dip molding is preferably 10⁸ to 10¹⁰ Ω/square. It is difficult to produce a dip molding having a lower surface resistivity than the above, whereas a dip molding having a high surface resistivity causes static electricity to be built up during work and is not suitable for the production of semiconductor components.

In the present invention, 10⁷ means 1 × 10⁷. The same applies to 10¹⁰, 10¹¹, etc. Furthermore, 10⁷ to 10¹⁰ means at least 1 × 10⁷ and at most 1 × 10¹⁰. The same applies to 10⁸ to 10¹¹, etc.

Surface resistivity and volume resistivity are measured in accordance with ASTM D257-93. Details of the measurement method are as described in

### Examples.

After being immersed in superpure water at 30°C for 2 hours the dip molding of the present invention preferably has a surface resistivity, measured under an atmosphere of 20°C and a relative humidity of 65%, of 10⁷ to 10¹⁰ Ω/square, and more preferably 10⁸ to 10¹⁰ Ω/square. A dip molding having a surface resistivity in this range even after being immersed in superpure water can yet more suitably be used for the production of precision electronic components or semiconductor components.

In the present invention, superpure water means water having a specific resistance at 25°C of at least 16 MΩcm. Moreover, in the present invention, the temperature of the superpure water in which the dip molding is immersed may be in the range of 30°C ± 10°C.

The dip molding of the present invention preferably has a volume resistivity, measured under an atmosphere of 20°C and a relative humidity of 65%, of 10⁸ to 10¹¹ Ωcm, and more preferably 10⁹ to 10¹¹ Ωcm. A dip molding having a volume resistivity in this range can yet more suitably be used for the production of precision electronic components or semiconductor components.

After being immersed in superpure water at 30°C for 2 hours the dip molding of the present invention preferably has a volume resistivity, measured under an atmosphere of 20°C and a relative humidity of 65%, of 10⁹ to 10¹¹ Ωcm. A dip molding having a volume resistivity in this range even after being immersed in superpure water can yet more suitably be used for the production of precision electronic components or semiconductor components.

The dip molding of the present invention is obtained by dip molding of a dip molding latex composition.

Processes for producing the dip molding according to the present invention can be divided roughly into two processes.

A first process for producing a dip molding comprises forming on a dip molding mold a dip molding layer comprising a dip molding latex composition, and then bringing the dip molding layer into contact with a cationic surfactant (hereinafter, also called 'production process 1').

A second process for producing a dip molding comprises using a dip molding latex composition comprising a rubber latex and a cationic surfactant to form, on a dip molding mold, a dip molding layer comprising the dip molding latex composition, and then vulcanizing the dip molding layer (hereinafter, also called 'production process 2').

### (First process for producing dip molding)

The above-mentioned production process 1 is now explained below.

With regard to a dip molding latex employed in the dip molding latex composition used in the production process 1, there can, for example, be cited rubber latexes such as a natural rubber latex and a synthetic conjugated diene rubber latex. In particular, from the viewpoint of ease of production of a dip molding having desired characteristics, the synthetic conjugated diene rubber latex may be used preferably.

The synthetic conjugated diene rubber latex is obtained by polymerization of a conjugated diene monomer, or a conjugated diene monomer and another monomer that can be copolymerized with the conjugated diene monomer.

Examples of the conjugated diene monomer include 1,3-butadiene, 2-methyl-1,3-butadiene, 2,3-dimethyl-1,3-butadiene, and halogen-substituted butadienes. They may be used singly or in a combination of two or more types. In particular, 1,3-butadiene may be used preferably. The amount of conjugated diene monomer used is preferably 30 to 89.5 wt % of the entire monomers, and more preferably 45 to 79 wt %.

Examples of said other monomer that can be copolymerized with the conjugated diene monomer include an ethylenically unsaturated nitrile monomer, an aromatic vinyl monomer, an ethylenically unsaturated carboxylic acid monomer, an ethylenically unsaturated carboxylic acid ester monomer, and an ethylenically unsaturated carboxylic acid amide. In particular, an ethylenically unsaturated nitrile monomer, an aromatic vinyl monomer, and an ethylenically unsaturated carboxylic acid monomer are preferably used, and an ethylenically unsaturated nitrile monomer and an ethylenically unsaturated carboxylic acid monomer are more preferably used.

Examples of the ethylenically unsaturated nitrile monomer include acrylonitrile and methacrylonitrile. In particular, acrylonitrile may be used preferably.

Examples of the aromatic vinyl monomer include styrene, α-methylstyrene, monochlorostyrene, and vinyltoluene.

Examples of the ethylenically unsaturated carboxylic acid monomer include ethylenically unsaturated monocarboxylic acids such as acrylic acid, methacrylic acid, crotonic acid, and cinnamic acid; ethylenically unsaturated polycarboxylic acids such as itaconic acid, fumaric acid, maleic acid, and butenetricarboxylic acid; and partially esterified ethylenically unsaturated polycarboxylic acids such as itaconic acid monoethyl ester, fumaric acid monobutyl ester, and maleic acid monobutyl ester. In particular, the ethylenically unsaturated monocarboxylic acids are preferable, and methacrylic acid may be used more preferably.

Examples of the ethylenically unsaturated carboxylic acid ester monomer include methyl acrylate, methyl methacrylate, ethyl acrylate, butyl acrylate, β-hydroxyethyl acrylate, β-hydroxypropyl acrylate, β-hydroxyethyl methacrylate, glycidyl acrylate, glycidyl methacrylate, *N,N*-dimethylaminoethyl (meth)acrylate, and *N,N*-diethylaminoethyl (meth)acrylate.

Examples of the ethylenically unsaturated carboxylic acid amide monomer include (meth)acrylamide and *N*-methylol (meth)acrylamide.

Other than the above-mentioned monomers, vinyl acetate, vinylpyrrolidone, vinylpyridine, etc. may be used.

These monomers may be used singly or in a combination of two or more types.

With regard to the conjugated diene rubber latex, from the viewpoint of ease of the effects of the present invention being exhibited and a dip molding having flexibility and excellent oil resistance and mechanical strength being obtained, those obtained by polymerization of a monomer mixture comprising a conjugated diene monomer, an ethylenically unsaturated nitrile monomer, and an ethylenically unsaturated carboxylic acid monomer may be used preferably. In this case, the composition ratio is preferably such that the conjugated diene monomer is 30 to 89.5 wt %, and preferably 45 to 79 wt %, the ethylenically unsaturated nitrile monomer is 10 to 50 wt %, and preferably 20 to 40 wt %, and the ethylenically unsaturated carboxylic acid monomer is 0.5 to 20 wt %, and preferably 1 to 15 wt %.

The conjugated diene rubber latex having the above-mentioned composition may be used preferably not only in the production process 1 but also in the production process 2, which will be described below.

The conjugated diene rubber latex can usually be produced by a conventionally known emulsion polymerization method using the above-mentioned monomers.

The dip molding latex composition preferably comprises, in addition to the above-mentioned dip molding latex, a vulcanizing agent and a vulcanization accelerator and, furthermore, zinc oxide if required.

With regard to the vulcanizing agent, those usually used in dip molding can be used, and examples thereof include sulfur such as powdered sulfur, flowers of sulfur, precipitated sulfur, colloidal sulfur, surface-treated sulfur, or insoluble sulfur; and polyamines such as hexamethylenediamine, triethylenetetramine, and tetraethylenepentamine. In particular, sulfur is preferable. The amount of vulcanizing agent used is preferably 0.1 to 10 parts by weight relative to 100 parts by weight of the latex solid content, and more preferably 0.2 to 4 parts by weight.

With regard to the vulcanization accelerator, those usually used in dip molding can be used, and examples thereof include dithiocarbamic acids such as diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(*N,N*-diethylthiocarbamoylthio)benzothiazole, 2-(2,6-dimethyl-4-morpholinothio)benzothiazofe, 2-(4'-morpholinodithio)benzothiazole, 4-morpholinyl-2-benzothiazyl disulfide, and 1,3-bis(2-benzothiazylmercaptomethyl)urea. In particular, zinc dibutyldithiocarbamate, 2-mercaptobenzothiazole, and zinc 2-mercaptobenzothiazole are preferable. These vulcanization accelerators may be used singly or in a combination of two or more types.

The amount of vulcanization accelerator used is preferably 0.1 to 10 parts by weight relative to 100 parts by weight of the solid content of the dip molding latex, and more preferably 0.2 to 4 parts by weight.

The amount of zinc oxide used is preferably at most 5 parts by weight relative to 100 parts by weight of the solid content of the dip molding latex, and more preferably at most 2 parts by weight.

The dip molding latex composition may further comprise, as required, a pH adjusting agent, a thickener, an age resister, a dispersing agent, a pigment, a filler, a softener, etc., which are normally used in dip molding.

The solid content concentration of the dip molding latex composition is usually 20 to 40 wt %, and preferably 25 to 35 wt %. The pH of the dip molding latex composition is usually at least 8, and preferably in the range of 9 to 11.

In the production process 1 of the present invention, after a dip molding layer comprising the above-mentioned dip molding latex composition is formed on a dip molding mold, the dip molding layer is brought into contact with a cationic surfactant.

With regard to the dip molding mold, it is for example made of porcelain, ceramic, metal, glass, plastic, etc. When the dip molding is a glove, the molding mold has a shape corresponding to the outline of a human hand, and various shapes can be employed according to the intended purpose of the glove to be produced, such as a shape that includes the wrist to the finger tips, and a shape that includes the elbow to the finger tips.

With regard to a process for forming on a dip molding mold a dip molding layer comprising the above-mentioned dip molding latex composition, a conventionally known dip molding process can be used, and examples thereof include a direct dipping process, an anode coagulant dipping process, and a Teague coagulant dipping process. In particular, the anode coagulant dipping process is preferable from the viewpoint of a dip molding having a uniform thickness being easily obtained.

In the case of the anode coagulant dipping process, a dip molding mold is usually immersed in a coagulant solution, and after a coagulant becomes attached to the mold it is immersed in a dip molding latex composition to thus form a dip molding layer on the mold.

The coagulant is not particularly limited as long as it is a metal salt electrolyte, and examples thereof include metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate. In particular, calcium chloride and calcium nitrate are preferable.

The coagulant is usually used as a solution in water, an alcohol, or a mixture thereof. The coagulant concentration is usually 5 to 70 wt %, and preferably 20 to 50 wt %.

In the production process 1 of the present invention, it is essential to bring the dip molding layer into contact with a cationic surfactant.

With regard to the cationic surfactant used in the present invention, a conventionally known one can be used, and examples thereof include a primary amine salt, a secondary amine salt, a tertiary amine salt, and a quaternary ammonium salt. In particular, the quaternary ammonium salt may be used preferably.

Examples of the primary amine salt include a hydrochloride, a sulfate, a nitrate, and an acetate of a primary amine having a substituent such as an alkyl group, alkenyl group, aryl group, or aralkyl group having 1 to 18 carbons. The lower limit for the number of carbons in the above-mentioned substituents is 1 for the alkyl group, 2 for the alkenyl group, 6 for the aryl group, and 7 for the aralkyl group. This restriction on the lower limit for the number of carbons can be applied to the explanation of other substituents in the present invention.

Examples of the secondary amine salt include a hydrochloride, a sulfate, a nitrate, and an acetate of a secondary amine having a substituent such as an alkyl group, alkenyl group, aryl group, or aralkyl group having 1 to 18 carbons.

Examples of the tertiary amine salt include a hydrochloride, a sulfate, a nitrate, and an acetate of a tertiary amine having a substituent such as an alkyl group, alkenyl group, aryl group, or aralkyl group having 1 to 18 carbons.

Examples of the quaternary ammonium salt include those represented by Formula (1) below, a pyridinium salt, and an imidazolium salt.

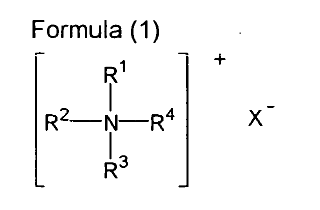

In the formula, R¹ to R⁴ denote groups selected from an alkyl group, alkenyl group, aryl group, and aralkyl group having 1 to 18 carbons, and may be identical to or different from each other. X denotes a halogen atom.

The total number of carbon atoms contained in the substituents denoted by R¹ to R⁴ in the quaternary ammonium salt represented by Formula (1) used in the production process 1 (also called 'total number of carbon atoms in the substituent') is preferably 5 to 30, more preferably 8 to 30, yet more preferably 12 to 30, and particularly preferably 14 to 30.

Specific examples of the compound represented by Formula (1) include lauryl trimethyl ammonium chloride, lauryl trimethyl ammonium bromide, cetyl trimethyl ammonium chloride, cetyl trimethyl ammonium bromide, stearyl trimethyl ammonium chloride, stearyl trimethyl ammonium bromide, lauryl benzyl dimethyl ammonium chloride, cetyl benzyl dimethyl ammonium chloride, didecyldimethyl ammonium chloride, distearyl dimethyl ammonium chloride, and diallyl dimethyl ammonium chloride.

Examples of the pyridinium salt include those represented by Formula (2) below.

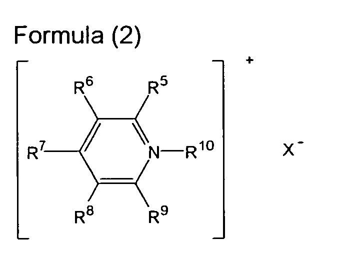

In the formula, R⁵ to R⁹ denote groups selected from an alkyl group, alkenyl group, aryl group, and aralkyl group having 1 to 18 carbons, and a hydrogen atom, and may be identical to or different from each other. R¹⁰ denotes a group selected from an alkyl group, alkenyl group, aryl group, and aralkyl group having 1 to 18 carbons. X denotes a halogen atom.

Specific examples of the compound represented by Formula (2) include lauryl pyridinium chloride, lauryl pyridinium bromide, hexadecyl pyridinium chloride, and hexadecyl pyridinium bromide.

Examples of the imidazolium salt include those represented by Formula (3) below.

### Formula (3)

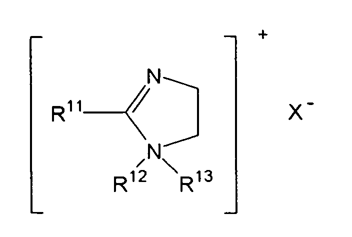

In the formula, R¹¹ and R¹² denote groups selected from an alkyl group, alkenyl group, aryl group, and aralkyl group having 1 to 18 carbons, and may be identical to or different from each other. R¹³ denotes a group selected from an alkyl group, alkenyl group, aryl group, and aralkyl group having 12 to 24 carbons. X denotes a halogen atom.

Specific examples of the compound represented by Formula (3) include 2-lauryl-*N*-methyl-*N*-laurylimidazolium chloride, and 2-lauryl-N-ethyl-N-laurylimidazolium chloride.

Among the above-mentioned quaternary ammonium salts, those represented by Formula (1) are preferably used, cetyl trimethyl ammonium chloride, lauryl trimethyl ammonium chloride, lauryl benzyl dimethyl ammonium chloride, and hexadecyl pyridinium chloride are more preferably used, and cetyl trimethyl ammonium chloride is particularly preferably used.

The cationic surfactant is preferably used as a solution in water, an alcohol, or a mixture thereof since more uniform contact of the dip molding layer with the cationic surfactant can be achieved. The concentration thereof is not particularly limited, but is usually 0.1 to 10 wt %, preferably 0.1 to 5 wt %, and more preferably 0.5 to 3 wt %. When the concentration is too low, the surface resistivity of the dip molding obtained tends to be high, and when it is too high, the effect of lowering the surface resistivity reaches a plateau, and it tends to be difficult to remove excess cationic surfactant attached to the dip molding layer.

The method for bringing the dip molding layer into contact with the cationic surfactant is not particularly limited and, for example, a method in which a dip molding layer is coated with a cationic surfactant solution using a brush or a spraying machine, or a method in which a dip molding layer is immersed in a cationic surfactant solution may be employed. From the viewpoint of more uniform contact between the dip molding layer and the cationic surfactant being achieved, the latter method is preferable.

When the dip molding layer is immersed in the cationic surfactant solution, the temperature of the cationic surfactant solution is usually 0°C to 80°C, and preferably 20°C to 60°C, and the immersion time is usually 1 second to 10 minutes, and preferably 30 seconds to 5 minutes.

The timing of bringing the dip molding layer into contact with the cationic surfactant is not particularly limited as long as it is after the dip molding layer is formed on a dip molding mold, but is preferably carried out prior to vulcanization of the dip molding layer since this can give a dip molding having a lower surface resistivity.

The dip molding layer thus obtained is usually subjected to vulcanization (cross-linking) by a thermal treatment.

The vulcanization of the dip molding layer is usually carried out by heating at a temperature of 80°C to 150°C for 10 to 120 minutes. With regard to a heating method, external heating with infrared rays or hot air or internal heating with high-frequency waves may be employed. In particular, heating with hot air is preferable.

The dip molding layer may be subjected to leaching prior to vulcanization. The leaching is usually carried out by immersing the dip molding layer on the dip molding mold in hot water at 20°C to 60°C for on the order of 1 to 30 minutes. The leaching enables water-soluble impurities (e.g., surplus emulsifier or coagulant, etc.) contained in the dip molding layer to be removed, thereby giving a dip molding having excellent mechanical strength.

This leaching may be carried out after the dip molding layer is subjected to vulcanization, but is preferably carried out prior to vulcanization of the dip molding layer from the viewpoint of water-soluble impurities being removed more efficiently.

After the dip molding layer is vulcanized, the vulcanized product thus obtained is released from the dip molding mold to give a dip molding. The release method may employ a method involving peeling off from the mold by hand or peeling off by means of water pressure or compressed air pressure. After release, it may be subjected to a thermal treatment at a temperature of 60°C to 120°C for 10 to 120 minutes.

### (Second process for producing dip molding)

In the production process 2 of the present invention, a dip molding latex composition formed by adding a cationic surfactant to a rubber latex is used.

With regard to the rubber latex, those cited as examples in the production process 1 may be used, and those preferably used are the same as in the production process 1.

The cationic surfactant added to the rubber latex is not particularly limited, and those cited as examples in the production process 1 may be used. In particular, a quaternary ammonium salt may be used preferably. With regard to the quaternary ammonium salt, those represented by Formula (1), pyridinium salts represented by Formula (2), and imidazolium salts represented by Formula (3) may be used similarly, but those represented by Formula (1) may be used preferably.

In the production process 2, the total number of carbon atoms contained in the substituents denoted by R¹ to R⁴ of Formula (1) (total number of carbon atoms in the substituent) is preferably 5 to 30, and more preferably 8 to 30.

In particular, cetyl trimethyl ammonium chloride and diallyl dimethyl ammonium chloride may be used preferably.

The amount of cationic surfactant used is preferably 0.01 to 5 parts by weight relative to 100 parts by weight of the rubber latex polymer, more preferably 0.05 to 3 parts by weight, and particularly preferably 0.1 to 2 parts by weight. When the amount of cationic surfactant used is too small, there is a possibility that a desired low surface resistivity might not be achieved, and when it is too large, there is a possibility that the stability of the dip molding latex composition might be impaired.

With regard to a method for adding the cationic surfactant to the rubber latex, it is preferable to add the cationic surfactant in the form of an aqueous solution. The concentration of the aqueous solution of the cationic surfactant is preferably 0.1 to 20 wt %, and more preferably 1.0 to 15 wt %. When the aqueous solution of the cationic surfactant having a concentration in the range above is used, it is possible to suppress formation of coarse aggregates during the addition, and a stable dip molding latex composition can be prepared.

When the above-mentioned aqueous solution of the cationic surfactant has a total number of carbon atoms in the substituent of 13 or larger, it is preferable to add a basic compound so that the pH thereof is preferably 9 or higher, more preferably 9.5 or higher, and particularly preferably 9.5 to 13, and when the total number of carbon atoms in the substituent is 5 to 12, it is preferable to adjust the pH so that it is preferably at least 5.5, more preferably at least 6, and particularly preferably 6 to 8. When the pH of the aqueous solution of the cationic surfactant to be added is too low, there is a possibility that the rubber latex might coagulate.

The basic compound is not particularly limited; potassium hydroxide, sodium hydroxide, ammonium hydroxide, etc. may be used, and potassium hydroxide or sodium hydroxide is particularly preferable.

After the cationic surfactant is added to the rubber latex, it is preferable to subject the mixture to aging at 5°C to 50°C for 30 minutes to 24 hours. This aging allows the cationic surfactant to be uniformly dispersed in the latex polymer and enables a dip molding having a lower surface resistivity to be produced.

Apart from the above-mentioned points, the dip molding latex composition used in the production process 2 employs the same conditions as in the production process 1 in terms of the vulcanizing agent, the vulcanization accelerator, other additives, the solid content concentration, the pH, etc.

The production process 2 comprises forming on a dip molding mold a dip molding layer comprising the above-mentioned dip molding latex composition, and then vulcanizing the dip molding layer.

The dip molding mold, a dip molding method, vulcanization conditions, a method for releasing a vulcanized product, etc. employed in the production process 2 are the same as those described in the production process 1. However, in the production process 2, since the use of the above-mentioned dip molding latex composition can give a dip molding having a sufficiently low surface resistivity, it is unnecessary to bring the dip molding layer thus formed into contact with a cationic surfactant.

The dip molding of the present invention can be produced so as to have a thickness of about 0.1 to about 3 mm, and can be used particularly suitably as a thin product having a thickness of 0.1 to about 0.3 mm. Specific examples thereof include medical products such as a baby's bottle nipple, a dropper, tubing, or a hot-water bottle; toys or sports equipment such as a balloon, a doll, or a ball; industrial products such as a pressure molding bag or a gas storage bag; various types of gloves; and finger stalls. It is suitable for use as gloves, and examples thereof include surgical, domestic, agricultural, fishery, and industrial unsupported type gloves and supported type gloves. The dip molding of the present invention has a low surface resistivity, and it can suitably be used as gloves for precision electronic component production and semiconductor component production.

### (Examples)

The present invention is explained in further detail below by reference to examples. 'Parts' and '%' in the description below are on a weight basis unless otherwise specified

Evaluation of rubber gloves was carried out as follows.

### (Surface resistivity and volume resistivity prior to immersing in superpure water)

A 10 cm square test piece was cut out from a palm part of a rubber glove that had been obtained.

After this test piece was allowed to stand in a constant temperature constant humidity chamber at 20°C and a relative humidity of 65% overnight, the surface resistivity and the volume resistivity of the test piece were measured under the same atmosphere in accordance with ASTM D257-93 at a measurement voltage of 250 V. The upper limit values for this measurement were 3.8 × 10¹⁰ Ω/square and 3.8 × 10¹¹ Ωcm respectively.

### (Surface resistivity and volume resistivity after immersing in superpure water)

A 10 cm square test piece was cut out from a palm part of a rubber glove that had been obtained, and immersed in 500 mL of superpure water having a specific resistance of 18.3 MΩcm at 30°C for 2 hours, and after immersion the test piece was dried at 70°C. After drying, the test piece was allowed to stand in a constant temperature constant humidity chamber at 20°C and a relative humidity of 65% overnight, and the surface resistivity and the volume resistivity of the test piece were measured under the same atmosphere in accordance with ASTM D257-93 at a measurement voltage of 250 V. The upper limit values for this measurement were 3.8 × 10¹⁰ Ω/square and 3.8 × 10¹¹ Ωcm respectively.

### (Example 1)

A vulcanizing agent dispersion was prepared by dispersing 1 part of sulfur, 0.5 parts of zinc diethyldithiocarbamate, 0.5 parts of zinc oxide, and 1.5 parts of titanium oxide in 3.5 parts of water.

After 7 parts of the above-mentioned vulcanizing agent dispersion was added to 250 parts of an acrylonitrile-butadiene-methacrylic acid copolymer latex (1,3-butadiene unit 67.5%, acrylonitrile unit 27%, methacrylic acid unit 5.5%; solid content concentration 40%; latex pH 8.5), an aqueous solution of potassium hydroxide and water were added thereto to give a dip molding latex composition having a pH of 9.5 and a solid content concentration of 30%.

After a hand mold heated at 60°C was immersed in a 25% aqueous solution of calcium nitrate (coagulant solution), it was dried at 60°C for 10 minutes. This hand mold to which the coagulant was attached was immersed in the above-mentioned dip molding latex composition for 10 seconds, thus forming a dip molding layer on the hand mold. This was then immersed in a 1% aqueous solution of cetyl trimethyl ammonium chloride at 30°C for 2 minutes and then subjected to leaching with deionized water at 40°C for 5 minutes. It was then dried at 60°C for 10 minutes, and the dip molding layer was then vulcanized at 120°C for 20 minutes. The vulcanized product thus obtained was released from the hand mold while inverting it to give a rubber glove. This rubber glove was evaluated, and the results are given in Table 1.

### (Example 2)

A rubber glove was obtained in the same manner as in Example 1 except that the cetyl trimethyl ammonium chloride concentration was changed from 1 % to 2%. This rubber glove was evaluated, and the results are given in Table 1.

### (Example 3)

A rubber glove was obtained in the same manner as in Example 1 except that lauryl trimethyl ammonium chloride was used instead of cetyl trimethyl ammonium chloride. This rubber glove was evaluated, and the results are given in Table 1.

### (Example 4)

A rubber glove was obtained in the same manner as in Example 1 except that hexadecyl pyridinium chloride was used instead of cetyl trimethyl ammonium chloride. This rubber glove was evaluated, and the results are given in Table 1.

### (Example 5)

A rubber glove was obtained in the same manner as in Example 1 except that lauryl benzyl dimethyl ammonium chloride was used instead of cetyl trimethyl ammonium chloride. This rubber glove was evaluated, and the results are given in Table 1.

### (Example 6)

A rubber glove was obtained in the same manner as in Example 1 except that, after the dip molding layer was vulcanized and before releasing from the hand mold, procedures of immersing it in an aqueous solution of sodium hypochlorite so as to chlorinate the surface of the vulcanized product and then neutralizing with an aqueous solution of potassium hydroxide were added. This rubber glove was evaluated, and the results are given in Table 1.

### (Comparative Example 1)

A rubber glove was obtained in the same manner as in Example 1 except that the immersion in a 1 % aqueous solution of cetyl trimethyl ammonium chloride was not carried out. This rubber glove was evaluated, and the results are given in Table 1.

| | Example | | | | | | Comparative Example |
|---|---|---|---|---|---|---|---|
| | 1 | 2 | 3 | 4 | 5 | 6 | 1 |
| Before immersion in superpure water | | | | | | | |
| Surface resistivity (× 10⁹ Ω/square) | 0.65 | 0.72 | 0.28 | 0.51 | 0.25 | 1.3 | 38< |
| Volume resistivity (× 10¹⁰ Ωcm) | 1.4 | 0.78 | 0.29 | 1.0 | 0.95 | 2.1 | 2.2 |
| After immersion in superpure water | | | | | | | |
| Surface resistivity (× 10⁹ Ω/square) | 4.7 | 2.0 | 0.87 | 3.2 | 1.9 | 1.2 | 38< |
| Volume resistivity (× 10¹⁰ Ωcm) | 3.7 | 2.5 | 0.38 | 6.5 | 5.9 | 1.7 | 38< |

The following can be seen from Table 1.

The conventional rubber glove has a surface resistivity exceeding 10¹⁰ Ω/square, and by immersing it in superpure water the volume resistivity thereof further increases (Comparative Example 1).

Compared with this comparative example, the rubber gloves of the present invention obtained by being brought into contact with a cationic surfactant have a low surface resistivity, and even if they are immersed in superpure water the surface resistivity thereof is less than 10¹⁰ Ω/square (Examples 1 to 6). The rubber gloves of the present invention can suitably be used in the production of precision electronic components or semiconductor components.

### (Example 7)

An aqueous solution of a cationic surfactant was prepared by adding a 5% aqueous solution of potassium hydroxide to a 10% aqueous solution of cetyl trimethyl ammonium chloride so as to adjust the pH to 10.

After 1 part of sulfur, 0.5 parts of zinc diethyldithiocarbamate, 0.5 parts of zinc oxide, and 1.5 parts of titanium oxide were added to 250 parts of an acrylonitrile-butadiene-methacrylic acid copolymer latex (1,3-butadiene unit 67.5%, acrylonitrile unit 27%, methacrylic acid unit 5.5%; solid content concentration 40%; latex pH 8.5), potassium hydroxide and water were added thereto to give a pH of 9.5 and a solid content concentration of 30%, and the above-mentioned aqueous solution of cationic surfactant was then added thereto at a ratio of 0.5 parts of the cetyl trimethyl ammonium chloride relative to 100 parts of the rubber latex polymer to give a dip molding latex composition. The dip molding latex composition was aged while stirring at 30°C for 16 hours and filtered with an 80 mesh wire screen. No coagulated material was observed.

A ceramic hand mold heated at 60°C was immersed in a 25% aqueous solution of calcium nitrate, which is a dip molding coagulant solution, withdrawn, and dried at 60°C for 10 minutes. This hand mold to which the coagulant was attached was immersed in the above-mentioned dip molding latex composition for 10 seconds and withdrawn, thus forming a dip molding layer on the hand mold. This was then subjected to leaching with deionized water at 40°C for 5 minutes and dried at 60°C for 10 minutes, and the dip molding layer was then vulcanized at 120°C for 20 minutes. The vulcanized product thus obtained was released from the hand mold while inverting it to give a rubber glove. The results obtained by measuring the surface resistivity and the volume resistivity of this rubber glove before and after being immersed in superpure water are given in Table 2.

### (Example 8)

The procedure of Example 1 was repeated except that a dip molding latex composition was prepared by changing the amount of aqueous solution of the cationic surfactant added to the rubber latex in Example 7 to a ratio of 1 part of cetyl trimethyl ammonium chloride relative to 100 parts of the latex polymer. The results obtained by measuring the surface resistivity and the volume resistivity of the rubber glove thus obtained are given in Table 2.

### (Example 9)

The rubber glove that was obtained by releasing it from the hand mold while inverting it in Example 7 was immersed in a 1% aqueous solution of sodium hypochlorite for 10 seconds and then in a 0.64% aqueous solution of hydrochloric acid for 10 seconds, thus chlorinating the surface of the dip molding. This glove was then washed with running water at 30°C for 20 minutes, then dried at 80°C for 1 hour, and then conditioned by allowing it to stand in an environment of 20°C and a relative humidity of 65% overnight. The surface resistivity and the volume resistivity of the glove thus conditioned were measured. The results are given in Table 2.

### (Example 10)

A glove was prepared in the same manner as in Example 7 except that a 10% aqueous solution of diallyl dimethyl ammonium chloride was prepared as the cationic surfactant, and after the pH was adjusted to 6.5, the solution was added at a ratio of 1 part of diallyl dimethyl ammonium chloride relative to 100 parts of the rubber latex polymer to give a dip molding latex composition. The surface of this glove was chlorinated, washed, dried, and conditioned in the same manner as in Example 9 to give a rubber glove. The results obtained by measuring the surface resistivity and the volume resistivity of this rubber glove before and after being immersed in superpure water are given in Table 2.

### (Comparative Example 2)

The procedure of Example 7 was repeated except that the aqueous solution of the cationic surfactant was not added to the rubber latex. The results obtained by measuring the surface resistivity and the volume resistivity of the rubber glove thus obtained are given in Table 2.

### (Comparative Example 3)

A glove obtained in the same manner as in Comparative Example 1 was subjected to immersion in an aqueous solution of sodium hypochlorite and subsequent treatment in the same manner as in Example 9. The surface resistivity and the volume resistivity of the glove conditioned were measured. The results are given in Table 2.

**Table 2**

| | Example | | | | Comparative Example | |
|---|---|---|---|---|---|---|
| | 7 | 8 | 9 | 10 | 2 | 3 |
| Before immersion in superpure water | | | | | | |
| Surface resistivity (× 10⁹ Ω/square) | 0.89 | 0.17 | 1.6 | 1.0 | 38< | 28 |
| Volume resistivity (× 10¹⁰ Ωcm) | 1.7 | 0.68 | 3.3 | 2.9 | 38< | 19< |
| After immersion in superpure water | | | | | | |
| Surface resistivity (× 10⁹ Ω/square) | 0.99 | 0.58 | 5.6 | 2.3 | 38< | 38< |
| Volume resistivity (× 10¹⁰ Ωcm) | 1.2 | 2.6 | 4.9 | 3.5 | 38< | 38< |

As shown in Table 2, the dip moldings in accordance with the production process of the present invention all had a surface resistivity of less than 10¹⁰ Ω/square, and a volume resistivity of less than 10¹¹ Ω/cm, which are both low resistivity, and they were low even after being immersed in superpure water (Examples 7 to 10).

On the other hand, the conventional rubber gloves had a surface resistivity exceeding 10¹⁰ Ω/square and a volume resistivity exceeding 10¹¹ Ω/cm (Comparative Examples 2 and 3).

In accordance with the production process of the present invention, a dip molding having a low surface resistivity, which is lower still than the surface resistivity of the conventional moldings even after being washed with superpure water, can be obtained.

## Claims

1. A dip molding having a surface resistivity, measured under an atmosphere of 20°C and a relative humidity of 65%, of 10⁷ to 10¹⁰ Ω/square.

2. The dip molding according to Claim 1, wherein the dip molding has a surface resistivity, measured under an atmosphere of 20°C and a relative humidity of 65%, of 10⁷ to 10¹⁰ Ω/square after being immersed in superpure water at 30°C for 2 hours.

3. The dip molding according to either Claim 1 or 2, wherein the dip molding has a volume resistivity, measured under an atmosphere of 20°C and a relative humidity of 65%, of 10⁸ to 10¹¹ Ωcm.

4. The dip molding according to any one of Claims 1 to 3, wherein the dip molding has a volume resistivity, measured under an atmosphere of 20°C and a relative humidity of 65%, of 10⁹ to 10¹¹ Ωcm after being immersed in superpure water at 30°C for 2 hours.

5. The dip molding according to any one of Claims 1 to 4, wherein the dip molding is a glove.

6. The dip molding according to any one of Claims 1 to 5, wherein the dip molding is a glove for precision electronic component production or semiconductor component production.

7. A process for producing a dip molding, the process comprising forming on a dip molding mold a dip molding layer comprising a dip molding latex composition, and then bringing the dip molding layer into contact with a cationic surfactant.

8. The process for producing a dip molding according to Claim 7, wherein the cationic surfactant is used as a solution having a concentration of 0.1 to 10 wt % in water, an alcohol, or a mixture thereof.

9. The process for producing a dip molding according to either Claim 7 or 8, wherein the cationic surfactant is a quaternary ammonium salt.

10. The process for producing a dip molding according to Claim 9, wherein the quaternary ammonium salt is cetyl trimethyl ammonium chloride.

11. A dip molding latex composition comprising a rubber latex to which is added a cationic surfactant.

12. The dip molding latex composition according to Claim 11, wherein the composition comprises an aqueous solution of the cationic surfactant having a cationic surfactant concentration of 0.1 to 20 wt %.

13. The dip molding latex composition according to either Claim 11 or 12, wherein the amount of cationic surfactant used is 0.01 to 5 parts by weight relative to 100 parts by weight of polymer forming the rubber latex.

14. The dip molding latex composition according to any one of Claims 11 to 13, wherein the cationic surfactant is a quaternary ammonium salt.

15. The dip molding latex composition according to Claim 14, wherein the quaternary ammonium salt is cetyl trimethyl ammonium chloride.

16. The dip molding latex composition according to Claim 14, wherein the quaternary ammonium salt is diallyl dimethyl ammonium chloride.

17. The dip molding latex composition according to any one of Claims 11 to 16, wherein the rubber latex is a conjugated diene rubber latex.

18. The dip molding latex composition according to Claim 17, wherein the conjugated diene rubber latex is a latex of a copolymer comprising 30 to 89.5 wt % of a conjugated diene monomer unit, 10 to 50 wt % of an ethylenically unsaturated nitrile monomer unit, and 0.5 to 20 wt % of an ethylenically unsaturated carboxylic acid monomer unit.

19. A process for producing a dip molding, the process comprising forming on a dip molding mold a dip molding layer comprising the dip molding latex composition according to any one of Claims 11 to 18, and then vulcanizing the dip molding layer.

20. The process for producing a dip molding according to Claim 19, wherein as a process for forming the dip molding layer, an anode coagulant dipping process is used.
